# EUROPEAN PATENT APPLICATION

(11) **EP 2 511 671 A1**
(43) Date of publication of application: **17.10.2012**
(21) Application number: 11176727.3
(22) Date of filing: 05.08.2011
(51) Int. Cl.: G01F 1/115, G01F 1/10, G01F 1/72

(54) **Digital liquid flow rate meter**

(30) Priority: 13.04.2011 IT VR20110075
(71) Applicant: PIUSI S.p.A., 46029 Suzzara (MN) (IT)
(72) Inventor: Varini, Otto, 46029 Suzzara MN (IT)
(74) Representative: Modiano, Micaela Nadia

(57) **Abstract**

A digital liquid flow rate meter that comprises a body (2) adapted to delimit a conduit (3) for conveying liquid with two connectors (3a, 3b) which provided respectively with male threading and with female threading. In the conduit (3) a turbine (4) is inserted provided with a magneto (4a) that transmits impulses to a microprocessor comprised within the body (2) and provided with an electronic card (5) complete with display (5a) for direct reading of the flow rate of liquid conveyed. The turbine (4) is associated with a shaft (7) that transmits selectively at the ends, according to the direction of travel of the liquid, an axial thrust to corresponding supports (8, 9) that are inserted in the conduit (3). The shaft (7) is provided with anti-wear elements (8b, 9b, 10, 11) that are resistant to wear in both directions of travel of the liquid.

## Description

The presence is known of digital devices for measuring the flow rate of liquids, which are designed to be installed along the pipe for conveying the liquids, and which are provided with an electronic card which is provided with a display that makes it possible to directly read the conveyed flow rate.

These devices comprise a body which delimits a conduit for conveying liquid, and inserted in this conduit is a small turbine which is provided with a magneto that transmits impulses to a microprocessor which is also comprised in the body and is provided with the card with display.

The known devices are unidirectional, i.e. they are adapted to operate with the fluid travelling through them in one direction only, and hence they are necessarily provided with means that can resist the axial thrust which, in this direction, is transmitted to one of the supports of the shaft with which the turbine is associated.

However, this fact creates limitations on the use of the device, and so the aim of the present invention is to provide a flow rate meter that can operate with the same characteristics whether the fluid travels through it in one direction or in the other.

The intended aim is achieved by a digital liquid flow rate meter, according to the invention, that comprises a body that is adapted to delimit a conduit for conveying liquid with two connectors that are provided respectively with male threading and with female threading, in said conduit there being inserted a turbine that is provided with a magneto that transmits impulses to a microprocessor that is comprised within said body and is provided with an electronic card complete with display for the direct reading of the flow rate of liquid conveyed, said turbine being associated with a shaft that transmits selectively at the ends, according to the direction of travel of the liquid, an axial thrust to corresponding supports that are inserted in said conduit, and is characterized in that the shaft is provided with means that are adapted to ensure operation in the absence of wear in both directions of travel of the liquid.

Further characteristics and advantages of the invention will become better apparent from the detailed description of a preferred, but not exclusive, embodiment of the invention, illustrated for the purposes of nonlimiting example in the accompanying drawings wherein:
Figure 1 is a perspective view of the invention;

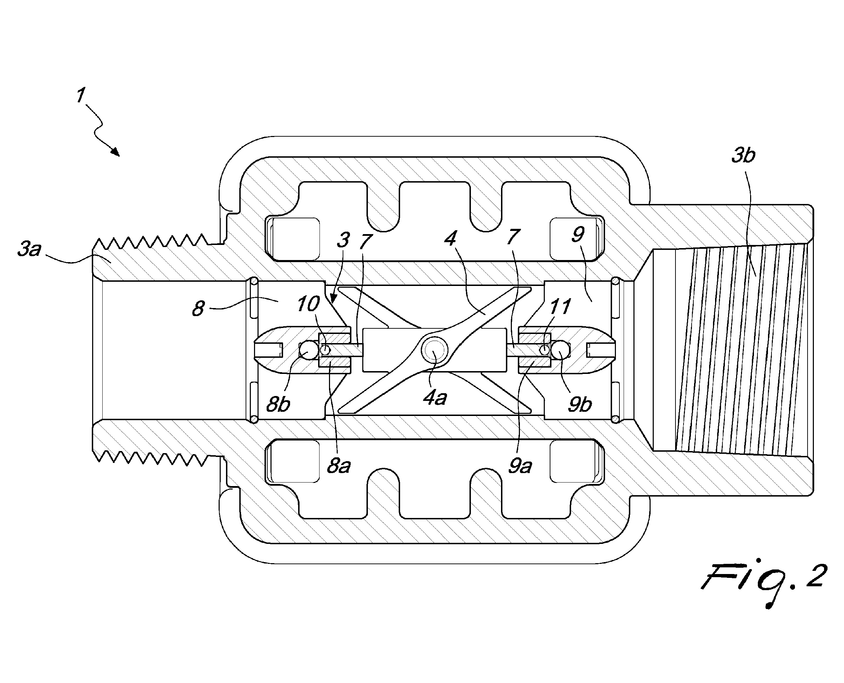

Figure 2 is a sectional view along line II-II in Figure 1;
Figure 3 is an exploded view of the invention;

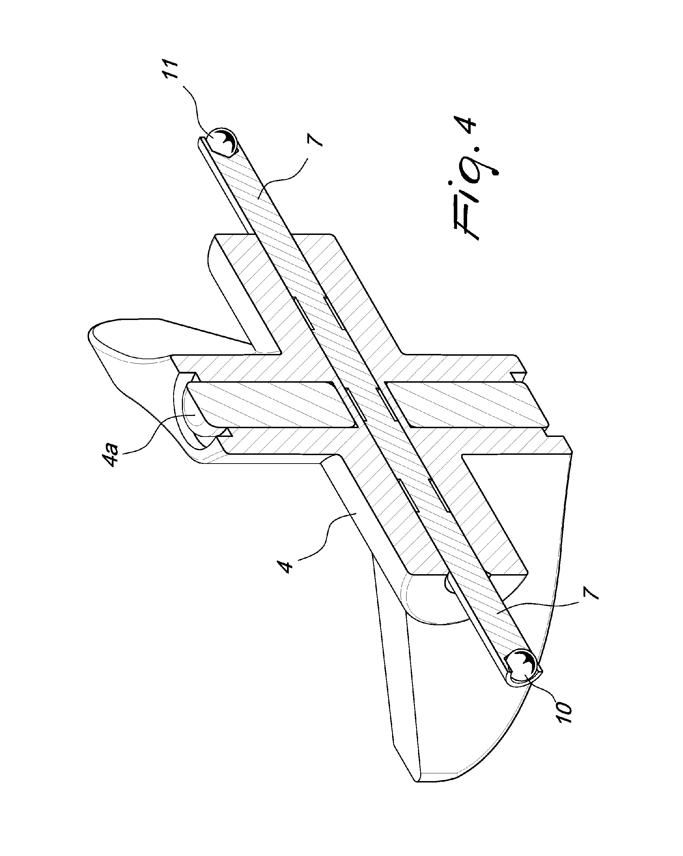

Figure 4 is a sectional view of the turbine with the associated shaft.

With reference to the figures, the reference numeral 1 generally designates the flow rate meter that comprises the body 2 which is made of aluminum and delimits the conduit 3 for conveying liquid with a connector 3a that is provided with male threading and a connector 3b that is provided with female threading.

In the conduit 3, which can be travelled by the fluid in one direction or the other indifferently, the turbine 4 is accommodated and can be put into rotation by the passing of the liquid, and it is provided with the magneto 4a that is adapted to send impulses to a microprocessor which is comprised in the body 2 and is provided with the electronic card 5 connected thereto by means of the wires 5b.

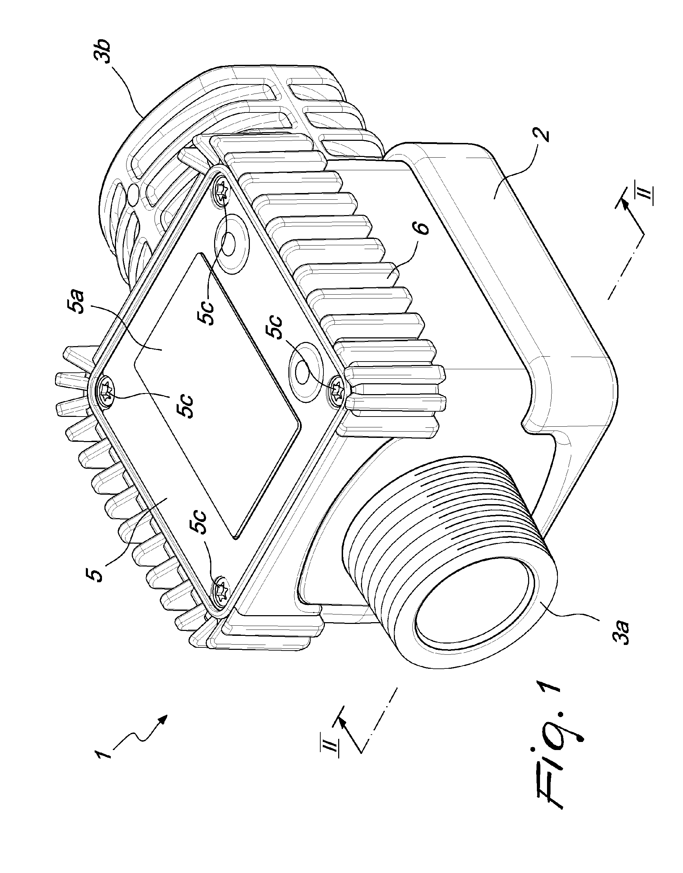

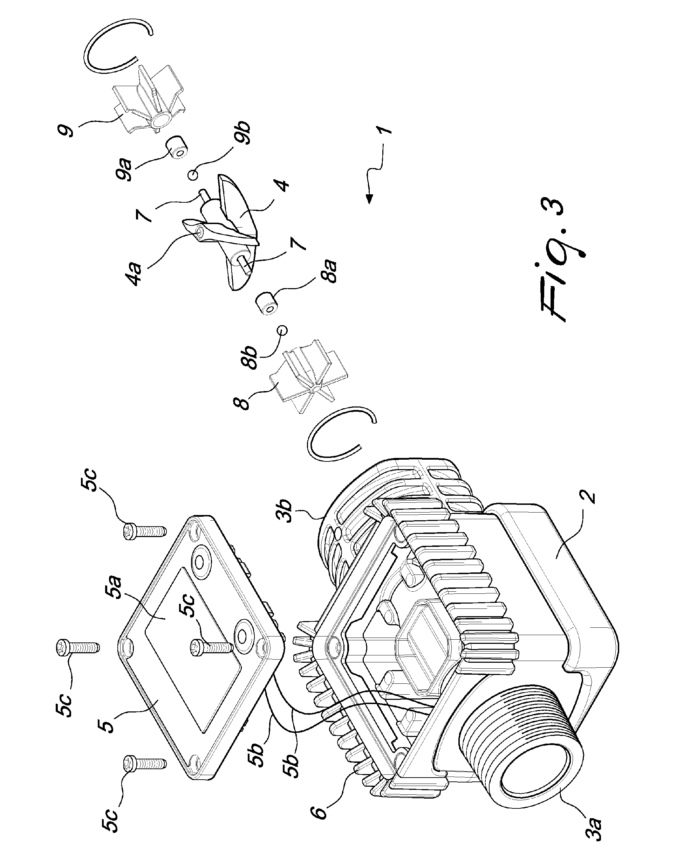

The electronic card 5 is provided with a display 5a for reading the flow rate, and is shown in Figure 1 in the operating position in the rubber cover 6 of the body 2, conveniently fixed by means of screws such as 5c so that it is oriented in the position shown in Figure 3.

The turbine 4 is associated with the shaft 7 that has the ends inserted, by means of the bushings 8a, 9a, in the two finned supports 8 and 9, and transmits an axial thrust to one or the other of these supports, depending on the direction of travel of the liquid.

The shaft 7 is provided at the two ends with terminals in the form of balls 10 and 11 that are made of ceramic, and in the supports 8 and 9 there are respectively the two balls 8b, 9b, also made of ceramic, in such a position as to come into contact with the balls 10 and 11 respectively.

In this way a long duration is ensured of the device, which can be travelled by the liquid in one direction or the other indifferently, owing to the fact that the elements that are pushed into mutual contact, such as said balls 8b, 9b, 10, 11, are made of a shape and of a material, that is to say ceramic, that provide anti-wear means having optimal resistance to wear even at high temperatures or in the presence of corrosive agents.

Instead of ceramic, sinterized metal powder, or case-hardened steel can be used.

The invention thus provided offers the user the ability to choose the mode of installation of the device independently of the direction of motion of the fluid that crosses it, basing the decision only on considerations regarding the availability of the threadings present on the lines to which to connect the connectors of the device itself.

It should be noted that it is possible to fix the electronic card 5 to the device with the display 5a oriented so as to make the reading as convenient as possible.

The invention, thus conceived, is susceptible of numerous modifications and variations, all of which are within the scope of the appended claims, and so for example the means with which both the ends of the shaft are provided in order to ensure operation in the absence of wear can be different.

The disclosures in Italian Patent Application No. VR2011A000075 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A digital liquid flow rate meter, comprising a body (2) that is adapted to delimit a conduit (3) for conveying liquid with two connectors (3a, 3b) that are provided respectively with male threading and with female threading, in said conduit (3) there being inserted a turbine (4) that is provided with a magneto (4a) that transmits impulses to a microprocessor that is comprised within said body (2) and is provided with an electronic card (5) complete with display (5a) for the direct reading of the flow rate of liquid conveyed, said turbine (4) being associated with a shaft (7) that transmits selectively at the ends, according to the direction of travel of the liquid, an axial thrust to corresponding supports (8, 9) that are inserted in said conduit (3), **characterized in that** the shaft (7) is provided with anti-wear means that are adapted to ensure operation in the absence of wear in both directions of travel of the liquid.

2. The flow rate meter according to claim 1, **characterized in that** the shaft (7) is provided at the two ends with a terminal (10, 11) made from a material that is resistant to wear and is adapted to abut against an element which is made from a material resistant to wear and which is inserted in each one of the two supports (8, 9).

3. The flow rate meter according to one or more of the preceding claims, **characterized in that** the electronic card (5) provided with display (5a) is adapted to be fixed to a cover (6) of the body (2) so that it can be removed and oriented.
